# EUROPEAN PATENT APPLICATION

(11) **EP 4 668 907 A1**
(43) Date of publication of application: **24.12.2025**
(21) Application number: 23921931.4
(22) Date of filing: 16.02.2023
(51) Int. Cl.: H04W 56/00

(54) **METHOD AND APPARATUS FOR MAINTAINING UPLINK TIME ALIGNMENT**

(71) Applicant: FUJITSU LIMITED, Kawasaki-shi, Kanagawa 211-8588 (JP)
(72) Inventor: JIA, Meiyi, Beijing 100022 (CN); YI, Su, Beijing 100022 (CN); LI, Guorong, Beijing 100022 (CN)
(74) Representative: Haseltine Lake Kempner LLP
(86) International application number: PCT/CN2023/076641
(87) International publication number: WO 2024/168777

(57) **Abstract**

Embodiments of the present disclosure provide a method and an apparatus for maintaining uplink time alignment, the method including: a terminal equipment maintains uplink time alignment of a serving cell based on one or two TA timers, wherein one TA timer is associated with a TAG, and the serving cell is associated with two TA timers. According to the embodiments of the present disclosure, in a multi-DCI multi-TRP operation with two TAs, the terminal equipment maintains uplink time alignment per each TRP of a serving cell rather than per a serving cell, based on a state of a TA timer of each TAG, so that the terminal equipment may continue to perform UL transmission when performing uplink alignment on at least one TRP associated with the serving cell, thereby enhancing uplink coverage, improving user experience, and improving network performance.

## Description

### TECHNICAL FIELD

The present disclosure relates to the field of communications.

### BACKGROUND

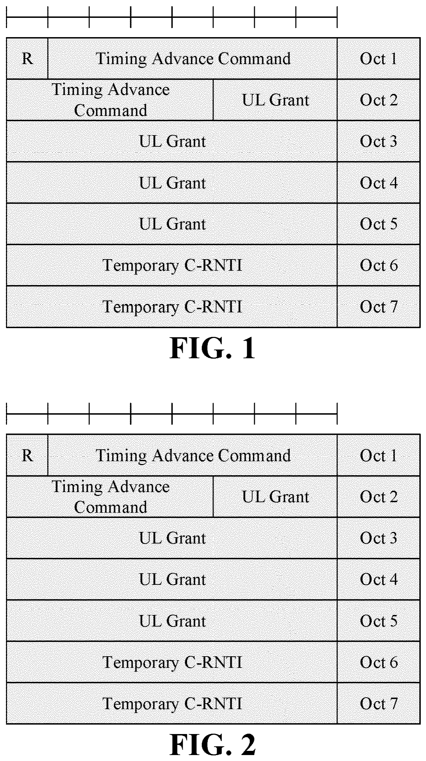

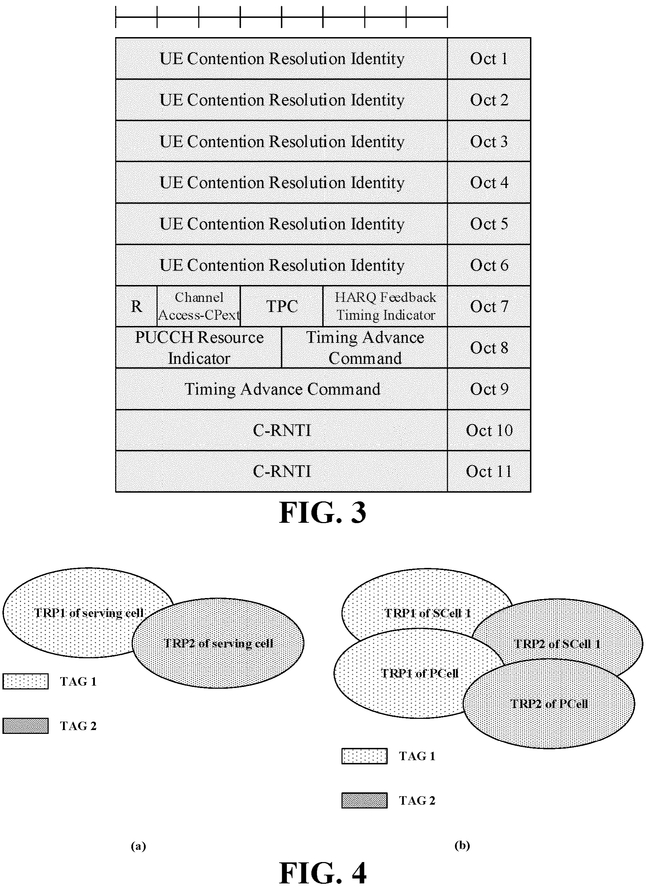

In a related art, a gNB (network device) provides TA (Timing Advance) to a UE (terminal equipment) via a RAR (Random Access Response) or a MAC (Media Access Control) payload of MSGB (Message B). As shown in FIGs. 1 to 3, FIG. 1 is a schematic diagram of providing TA to a UE via a RAR, showing a format of a MAC RAR; FIGs. 2 and 3 are schematic diagrams of providing TA to a UE via a MAC payload of MSGB, in which FIG. 2 shows a format of fallbackRAR, and FIG. 3 shows a format of successRAR.

In a multi-TRP (Transmission and Receiving Point) operation, one serving cell may schedule a UE from two TRPs to provide better coverage, reliability and/or data rates of a PDSCH (Physical Downlink Shared Channel), a PDCCH (Physical Downlink Control Channel), a PUSCH (Physical Uplink Shared Channel) and a PUCCH (Physical Uplink Control Channel).

There are two different operation modes to schedule multi-TRP PDSCH transmission: single-DCI (Downlink Control Information) and multi-DCI. For both modes, within a configuration provided by a RRC (Radio Resource Control) layer, control of uplink and downlink operations can be implemented by a physical layer and a MAC layer. In a single-DCI mode, a UE is scheduled by the same DCI for both TRPs, while in a multi-DCI mode, the UE is scheduled by respective independent DCIs from each TRP.

For an inter-cell multi-TRP operation, for multi-DCI PDSCH transmission, one or more TCI (Transmission Configuration Indicator) states can be associated with SSB (Synchronization Signal Blocks) with a PCI (Physical Cell Identifier) different from the serving cell PCI. An activated TCI states can be associated with at most one PCI different from the serving cell PCI at a time.

In addition, MIMO (Multiple-Input Multiple-Output) is one of the key technologies of a NR (New Radio/new air interface) system and has been successfully commercialized at present. Rel-15/16/17 (versions 15, 16, 17) study and define MIMO characteristics for FDD (Frequency Division Duplex/Duplexing) and TDD (Time Division Duplex/Duplexing) systems, the main part of which is a downlink MIMO operation.

On the other hand, beam-level mobility can be performed within a cell or between cells, the latter is called Inter-cell Beam Management (ICBM). For ICBM, the UE may receive or transmit a UE dedicated channel/signal via a TRP associated with a PCI different from a PCI of a serving cell. Meanwhile, a non-UE dedicated channel/signal can only be received via a TRP associated with the PCI of the serving cell.

In Rel-18 (version 18), it is important to determine and define a necessary enhancement for uplink MIMO, in which two timing advances (TAs) are provided to promote uplink multi-TRP deployment, thus additional uplink performance enhancements may be provided. Goal is to study and define (if reasonable) two uplink TAs for a multi-DCI multi-TRP operation.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

### SUMMARY

The inventor finds that in an existing mechanism, a TA timer per each TAG (Timing Advance Group), used for uplink time alignment, is maintained per each TAG. A terminal behavior when the TA timer expires applies to all serving cells belonging to corresponding TAG.

For a multi-DCI multi-TRP operation with two TAs, if the existing mechanism is reused, when one TA timer expires, UL (Up-Link, abbreviated as uplink) transmission on a serving cell will be stopped, and uplink configurations will be released, even if a terminal is uplink time aligned on one of TRPs in this serving cell.

For example, as shown in FIG. 4, TRP1 and TRP2 of a serving cell belong to TAG1 and TAG2 respectively. According to the existing mechanism, when a TA timer associated with one TAG (TAG1 or TAG2) in TAG1 and TAG2 expires, UL transmission of this serving cell will be stopped. In the example shown in FIG. 4, TRP2 belongs to a serving cell, the present disclosure is not limited to this. TRP2 may also belong to a non-serving cell (in a case of inter-cell), which is associated with the serving cell. In a case of CA (carrier aggregation), when a TA timer associated with a primary TAG expires, UL transmissions of all serving cells will be stopped, and all uplink configurations will be released, as shown in (b) of FIG. 4. This makes an uplink coverage range become smaller, thereby reducing network throughput.

For at least one of the above problems or other similar problems, the embodiments of the present disclosure provide a method and an apparatus for maintaining uplink time alignment.

According to an aspect of the embodiments of the present disclosure, an apparatus for maintaining uplink time alignment is provided, configured in a terminal equipment, the apparatus comprising:
a processing unit configured to maintain uplink time alignment of a serving cell based on one or two TA timers, wherein one TA timer is associated with a TAG, and the serving cell is associated with two TA timers.

According to another aspect of the embodiments of the present disclosure, an apparatus for maintaining uplink time alignment is provided, configured in a terminal equipment, the apparatus comprising:
a processing unit configured to maintain uplink time alignment of a serving cell based on a state of one TA timer, wherein the TA timer is associated with the serving cell.

One of advantageous effects of the embodiments of the present disclosure is that: according to the embodiments of the present application, in a multi-DCI multi-TRP operation with two TAs, the terminal equipment maintains uplink time alignment of a serving cell based on one or two TA timers, so that the terminal equipment may continue to perform UL transmission when at least one TRP associated with the serving cell is uplink aligned, thereby enhancing uplink coverage, improving user experience, and improving network performance.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the terms of the attached claims, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF THE DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art may further obtain other drawings according to these drawings under the premise that they do not pay inventive labor. In the drawings:
FIG. 1 is a schematic diagram of providing a TA to a UE via a RAR;
FIGS. 2 and 3 are schematic diagrams of providing a TA to a UE via MAC payload of a MSGB;
FIG. 4 is a schematic diagram of a multi-TRP operation in a cell with two TAs;
FIG. 5 is a schematic diagram of an example of an application scenario of the embodiments of the present disclosure;
FIG. 6 is a schematic diagram of a scenario of a method for maintaining uplink time alignment in the embodiments of the present disclosure;
FIG. 7 is a schematic diagram of a method for maintaining uplink time alignment in the embodiments of the present disclosure;
FIG. 8 is a schematic diagram of another scenario of a method for maintaining uplink time alignment in the embodiments of the present disclosure;
FIG. 9 is another schematic diagram of a method for maintaining uplink time alignment in the embodiments of the present disclosure;
FIG. 10 is a schematic diagram of an apparatus for maintaining uplink time alignment in the embodiments of the present disclosure;
FIG. 11 is another schematic diagram of an apparatus for maintaining uplink time alignment in the embodiments of the present disclosure;
FIG. 12 is a schematic diagram of a terminal equipment in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE-Advanced (LTE-A), Wideband Code Division Multiple Access (WCDMA), High-Speed Packet Access (HSPA), New Radio (NR) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and future 5G and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB) and a 5G base station (gNB), etc., and may further includes a Remote Radio Head (RRH), a Remote Radio Unit (RRU), a relay or a low power node (such as femto, pico, etc.). And the term "base station" may include some or all functions of a base station, each base station may provide communication coverage to a specific geographic region. The term "cell" may refer to a base station and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera, or may be an IAB-MT, and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

In an RRC connected state, the gNB is responsible for maintaining timing advance to keep L1 synchronized. Serving cells having UL to which the same timing advance applies and using the same timing reference cell are grouped in one TAG. Each TAG contains at least one serving cell with configured uplink, and the mapping of each serving cell to a TAG is configured by RRC.

The TAG includes a primary TAG (PTAG) and a secondary TAG (STAG). The primary TAG is a timing advance group including a special cell (SpCell). For the primary TAG, the UE uses PCell (primary cell) as a timing reference cell, except with shared spectrum channel access where an SCell (secondary cell) can also be used as a timing reference cell in certain cases. In a secondary TAG, the UE may use any of the activated secondary cells of this secondary TAG as a timing reference cell, but should not change it unless necessary.

Timing advance updates are signalled to the UE by the gNB via MAC CE (MAC Control Element) commands. These commands restart a TAG-specific timer that indicates whether the L1 can be synchronized or not: when the timer is running, the L1 is considered synchronized; otherwise, the L1 is considered as non-synchronized (in which case uplink transmission can only take place through MSG1 (Message 1) /MSGA (Message A)).

In addition, RRC configures the following parameters to maintain UL time alignment:
- *timeAlignmentTimer* (per TAG): which controls how long the MAC entity considers the serving cells belonging to the associated TAG to be uplink time aligned.

When a TAC (Timing Advance Command) MAC CE is received, and if a indicated TAG has maintained an N_{TA}, the MAC entity will start or restart the *timeAlignmentTimer* associated with the indicated TAG.

When a TAC is received in a RAR message for serving cells belonging to a TAG or in an MSGB (Message B) of a special cell, the MAC entity shall: if a random access preamble is not selected by the MAC entity among contention-based random access preambles, start or restart *timeAlignmentTimer* associated with the TAG; otherwise, if *timeAlignmentTimer* associated with the TAG is not running, start *timeAlignmentTimer* associated with the TAG, and when the contention resolution is considered not successful or when the contention resolution is considered successful for SI (System Information) request after transmitting a HARQ (Hybrid Automatic Repeat-reQuest) feedback for an MAC PDU including a UE contention resolution identity MAC CE, stop *timeAlignmentTimer* associated with the TAG; Else, ignore this received TAC.

When an absolute timing advance command in response to MSGA (Message A) transmission including a C-RNTI (Cell Radio Network Temporary Identifier) MAC CE is received, the MAC entity will start or restart *timeAlignmentTimer* associated with a PTAG (Primary Timing Advance Group).

When a *timeAlignmentTimer* expires:
if the *timeAlignmentTimer* is associated with the PTAG, the MAC entity shall: flush all HARQ buffers for all serving cells; notify RRC to release PUCCHs for all serving cells, if configured; notify RRC to release SRS (Sounding Reference Signal) for all serving cells, if configured; clear any configured downlink assignments and configured uplink grants; clear any PUSCH resources for a semi-persistent CSI (Channel State Information) reporting; consider all running *timeAlignmentTimers* as expired; maintain N_{TA} of all TAGs.

Else, if the *timeAlignmentTimer* is associated with a STAG, for all serving cells belonging to this TAG, the MAC entity shall: flush all HARQ buffers; notify RRC to release a PUCCH, if configured; notify RRC to release an SRS, if configured; clear any configured downlink assignments and configured uplink grants; clear any PUSCH resources for a semi-persistent CSI reporting; maintain N_{TA} of this TAG.

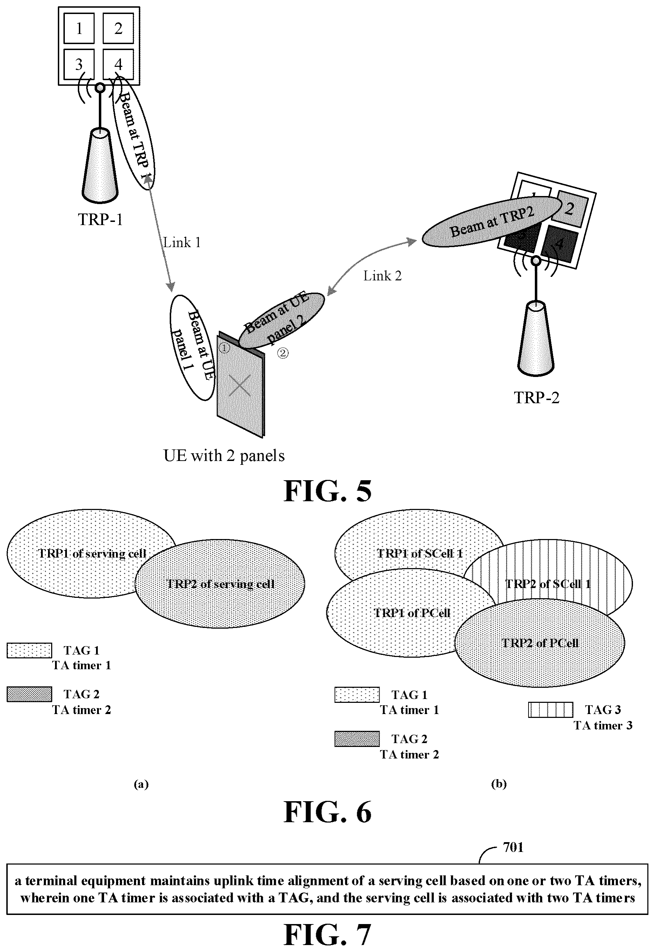

FIG. 5 is a schematic diagram of an example of an application scenario of the embodiments of the present disclosure. As shown in FIG. 5, this scenario involves a multi-DCI multi-TRP operation with two TAs, the TRP is a part of a gNB that receives signals from a terminal UE and/or transmits signals to a terminal UE. Both TRPs may belong to the same cell, or may belong to different cells. If both TRPs belong to the same cell, it is called an intra-cell multi-DCI multi-TRP operation with two TAs. If these two TRPs belong to different cells, it is called an inter-cell multi-DCI multi-TRP operation with two TAs.

Various implementations of the present disclosure will be described below with reference to the drawings. These implementations are exemplary only and are not limitations to the present disclosure. In the following description, "if...", "in a case where..." and "when...", etc. have the same meaning, and may be interchangeable. Furthermore, in the following description, "refer to..." may further be replaced by "include..." or "correspond to..." .

### Embodiments of a first aspect

Embodiments of the present disclosure provide a method for maintaining uplink time alignment, which is described from a terminal equipment side.

FIG. 6 is a schematic diagram of a scenario of a method for maintaining uplink time alignment in the embodiments of the present disclosure. As shown in FIG. 6, in a non-CA scenario (as shown in (a) of FIG. 6), the serving cell is associated with two TRPs, each TRP is associated with one TAG, and each TAG is associated with one TA timer; and in a CA scenario (as shown in (b) of FIG. 6), the serving cell includes a primary cell and at least one secondary cell (secondary cell 1), the primary cell is associated with TRP1 and TRP2, and the secondary cell 1 is also associated with TRP1 and TRP2, TRP1 and TRP2 associated with the primary cell are associated with TAG1 and TAG2 respectively, TRP1 associated with the secondary cell is associated with TAG1, TRP2 associated with the secondary cell is associated with TAG3, and each TAG is associated with one TA timer.

FIG. 7 is a schematic diagram of a method for maintaining uplink time alignment in the embodiments of the present disclosure. As shown in FIG. 7, the method includes:
701: a terminal equipment maintains uplink time alignment of a serving cell based on one or two TA timers, wherein one TA timer is associated with a TAG, and the serving cell is associated with two TA timers.

It should be noted that the above FIG. 7 only schematically describes the embodiments of the present disclosure, but the present disclosure is not limited to this. For example, other some operations can be increased. Persons skilled in the art may make appropriate modifications according to the above contents, not limited to the records in the above FIG. 7.

According to the above embodiments, in a multi-DCI multi-TRP operation with two TAs, the terminal equipment maintains uplink time alignment per each TRP of a serving cell rather than per a serving cell, based on a state of a TA timer of each TAG, so that the terminal equipment may continue to perform UL transmission when performing uplink alignment on at least one TRP associated with the serving cell, thereby enhancing uplink coverage, improving user experience, and improving network performance.

In the above embodiments, one TA timer is associated with one TAG, which may be that one TA timer is associated with one TCI state or a TCI state group or a spatial relationship or a spatial relationship group; may further be that one TA timer is associated with one CORESET (Control Resource Set) or CORESETPool (CORESET pool); or may be that one TA timer is associated with one DL RS (downlink reference signal) or DL RS group; or, one TA timer is associated with one PCI or one PCI group that is different from a PCI of the serving cell; or any combination of the above situations.

In some embodiments, maintaining uplink time alignment of a serving cell refers to that a terminal equipment starts or restarts a TA timer corresponding to one or more TAGs in a case where at least one of the following conditions is satisfied, the conditions including but being not limited to:
a timing advance command (TAC) MAC CE is received;
a RAR message is received and the RAR message contains a TAC of a special cell;
a MSGB is received and the MSGB contains a TAC of a special cell;
a response message of a MSGA transmission including a C-RNTI MAC CE is received and the response message contains an absolute TAC; and
a RRC signaling is received and the RRC signaling indicates a TAG ID.

For example, when receiving the TAC MAC CE, the terminal equipment starts or restarts a corresponding TA timer, that is, starts a TA timer corresponding to a TAG associated with the TAC MAC CE.

For another example, when receiving a TAC of a special cell in the RAR message or in the MSGB, the terminal equipment starts or restarts a corresponding TA timer, that is, a TA timer indicated by the RAR message or the MSGB. In some implementations, the RAR message may contain TAG ID(s) of one or more TAGs, or be associated with one or more TAGs, based on which the terminal equipment may start or restart a TA timer corresponding to the TAG. Similarly, the MSGB may contain TAG ID(s) of one or more TAGs, or be associated with one or more TAGs, based on which the terminal equipment may start or restart a TA timer corresponding to the TAG. The above text is just an example for description, the RAR message or MSGB may further be associated with a TAG by other means.

For another example, when receiving an absolute TAC in a response message of a MSGA transmission including a C-RNTI MAC CE, the terminal equipment starts or restarts a corresponding TA timer, that is, a TA timer indicated by the response message. In some implementations, the response message may include TAG ID(s) of one or more TAGs, or be associated with one or more TAGs, based on which the terminal equipment may start a TA timer corresponding to the TAG.

For another example, when receiving RRC signaling indicating a TAG ID, the terminal equipment starts or restarts a TA timer corresponding to a TAG to which the TAG ID corresponds.

In each of the above embodiments, "being associated with one TAG" may be: being associated with a TCI state or a TCI state group or a spatial relationship or a spatial relationship group; may further be: being associated with a CORESET or CORESETPool; or may be: being associated with a DL RS or a DL RS group; or, being associated with a PCI or a PCI group that is different from a PCI of the serving cell. The meaning of "being associated with more TAGs" is similar, description is omitted here.

In some other embodiments, maintaining uplink time alignment of a serving cell refers to that a terminal equipment stops a corresponding TA timer in a case where at least one of the following conditions is satisfied, the conditions including but being not limited to:the contention resolution is considered not successful;
the contention resolution is considered successful for SI request after transmitting a HARQ feedback including a UE contention resolution ID MAC CE.

For example, when the contention resolution is considered not successful, the terminal equipment stops the corresponding TA timer; for another example, when the contention resolution is considered successful for SI request after transmitting a HARQ feedback including a UE contention resolution ID MAC CE, the terminal equipment stops the corresponding TA timer. The above text is just an example for description, the terminal equipment may further stop the corresponding TA timer in other situations.

In some embodiments, when the serving cell is a special cell, the TAG is a primary TAG, and the number of the primary TAGs is two. That is, one MAC entity has two TAGs including a special cell, both TAGs are primary TAGs.

In the above embodiments, the special cell may belong to the two primary TAGs.

In some embodiments, when the serving cell is a secondary cell, the secondary cell may belong to two TAGs.

In the above embodiments, both TAGs may be primary TAGs or secondary TAGs, or one is a primary TAG, and the other is a secondary TAG.

In some embodiments, that the terminal equipment maintains uplink time alignment of a serving cell based on a TA timer refers to that when the TA timer expires, the terminal equipment performs at least one of the following behaviors which include but are not limited to:
not transmit/perform or stop uplink transmission (such as all uplink transmissions) associated with the TA timer;
not perform or stop uplink transmission (such as all uplink transmissions) corresponding to a TAG associated with the TA timer;
clear configured downlink assignments and configured uplink grants (such as all configured downlink assignments and configured uplink grants) associated with the TA timer;
clear configured downlink assignments and configured uplink grants (such as all configured downlink assignments and configured uplink grants) corresponding to a TAG associated with the TA timer;
clear PUSCH resources (such as all PUSCH resources) for a semi-persistent CSI reporting associated with the TA timer;
clear PUSCH resources (such as all PUSCH resources) for a semi-persistent CSI reporting;
flush a HARQ buffer (such as all HARQ buffers) corresponding to a TAG associated with the TA timer; and
flush a HARQ buffer (such as all HARQ buffers) associated with the TA timer.

In the above embodiments, "a TA timer expires" refers to that one of the two TA timers expires, and the other TA timer is running.

In the above embodiments, the uplink transmission may be PUCCH, SRS, configured UL grant transmission, CSI reporting, etc., the present disclosure is not limited to this.

According to the above embodiments, for example, relevant descriptions in the Standard may be modified as follows:

| | | |
|---|---|---|
| 1> when a *timeAlignmentTimerr_TRP* for a TRP belonging to a serving cell expires: | | |
| | 2> if a the *timeAlignmentTimer_TRP* for the other TRP belonging to the serving cell is running, then for the TRP: | |
| | | 3> flush all HARQ buffers associated with the TRP; |
| | | 3> not transmit PUCCH on the TRP |
| | | 3> not transmit SRS on the TRP |
| | | 3> not transmit configured uplink grants; |
| | | 3> not transmit CSI reporting; |

In some embodiments, that the terminal equipment maintains uplink time alignment of a serving cell based on two TA timers refers to that when both TA timers associated with a secondary cell expires, the terminal equipment performs at least one of the following behaviors which include but are not limited to:
notify RRC to release uplink configuration of the secondary cell;
clear all configured downlink assignments and configured uplink grants of the secondary cell;
clear all PUSCH resources for a semi-persistent CSI reporting of the secondary cell; and
flush all HARQ buffers for the secondary cell.

In the above embodiments, the uplink configuration e.g. is PUCCH configuration (if configured), and for another example is SRS configuration (if configured), the present disclosure is not limited to this.

In the above embodiments, at least one TA timer associated with the special cell or the primary TAG does not expire or is running.

According to the above embodiments, for example, relevant descriptions in the Standard may be modified as follows:

| | | |
|---|---|---|
| 1> when a *timeAlignmentTimer_TRP* expires: | | |
| | 2> if the *timeAlignmentTimer_TRP* is associated with the PTAG, and if the other | |
| | *timeAlignmentTimer_TRP* associated with the PTAG expires (is not running): ... | |
| | | 3> flush all HARQ buffers for all Serving Cells; |
| | | 3> notify RRC to release PUCCH for all Serving Cells, if configured; |
| | | 3> notify RRC to release SRS for all Serving Cells, if configured; |
| | | 3> clear any configured downlink assignments and configured uplink grants; |
| | | 3> clear any PUSCH resource for semi-persistent CSI reporting; |
| | | 3> consider all running *timeAlignmentTimers* and *timeAlignmentTimer_TRPs* as expired; |
| | | 3> maintain N_{TA} (defined in TS 38.211 [8]) of all TAGs. |
| | 2> else if the *timeAlignmentTimer_TRP* is associated with the STAG and if the other *timeAlignmentTimer_TRP* for a serving cell belonging to this STAG expires (is not running), then for the Serving Cell: | |
| | | 3> flush all HARQ buffers; |
| | | 3> notify RRC to release PUCCH, if configured; |
| | | 3> notify RRC to release SRS, if configured; |
| | | 3> clear any configured downlink assignments and configured uplink grants; |
| | | 3> clear any PUSCH resource for semi-persistent CSI reporting |

The above description is just an example for illustration, for example, "TRP" may further be replaced with other expressions, the present disclosure does not impose restrictions on this.

In some other embodiments, the terminal equipment maintains uplink time alignment of a serving cell based on two TA timers refers to that when both TA timers associated with a special cell and/or a primary TAG expire, the terminal equipment performs at least one of the following behaviors which include but are not limited to:
notify RRC to release uplink configurations of all serving cells;
clear all configured downlink assignments and configured uplink grants;
clear all PUSCH resources for a semi-persistent CSI reporting;
consider all running TA timers as expired; and
flush all HARQ buffers for all serving cells.

In the above embodiments, the uplink configuration e.g. is PUCCH configuration (if configured), and for another example is SRS configuration (if configured), the present disclosure is not limited to this.

According to the above embodiments, for example, relevant descriptions in the Standard may be modified as follows:

| | | |
|---|---|---|
| 1> when both *timeAlignmentTimer_TRP* associated with the PTAGs expires: | | |
| | 3> flush all HARQ buffers for all Serving Cells; | |
| | 3> notify RRC to release PUCCH for all Serving Cells, if configured; | |
| | 3> notify RRC to release SRS for all Serving Cells, if configured; | |
| | 3> clear any configured downlink assignments and configured uplink grants; | |
| | 3> clear any PUSCH resource for semi-persistent CSI reporting; | |
| | | 3> consider all running *timeAlignmentTimers* and *timeAlignmentTimer_TRPs* as expired; |
| | | 3> maintain N_{TA} (defined in TS 38.211 [8]) of all TAGs. |
| | 2> else if all *timeAlignmentTimer_TRP* associated with the Serving Cell expires: | |
| | | 3> flush all HARQ buffers; |
| | | 3> notify RRC to release PUCCH, if configured; |
| | | 3> notify RRC to release SRS, if configured; |
| | | 3> clear any configured downlink assignments and configured uplink grants; |
| | | 3> clear any PUSCH resource for semi-persistent CSI reporting; |

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, in a multi-DCI multi-TRP operation with two TAs, the terminal equipment maintains uplink time alignment per each TRP of a serving cell rather than per a serving cell, based on a state of a TA timer of each TAG, so that the terminal equipment may continue to perform UL transmission when performing uplink alignment on at least one TRP associated with the serving cell, thereby enhancing uplink coverage, improving user experience, and improving network performance.

### Embodiments of a second aspect

Embodiments of the present disclosure provide a method for maintaining uplink time alignment, which is described from a terminal equipment side.

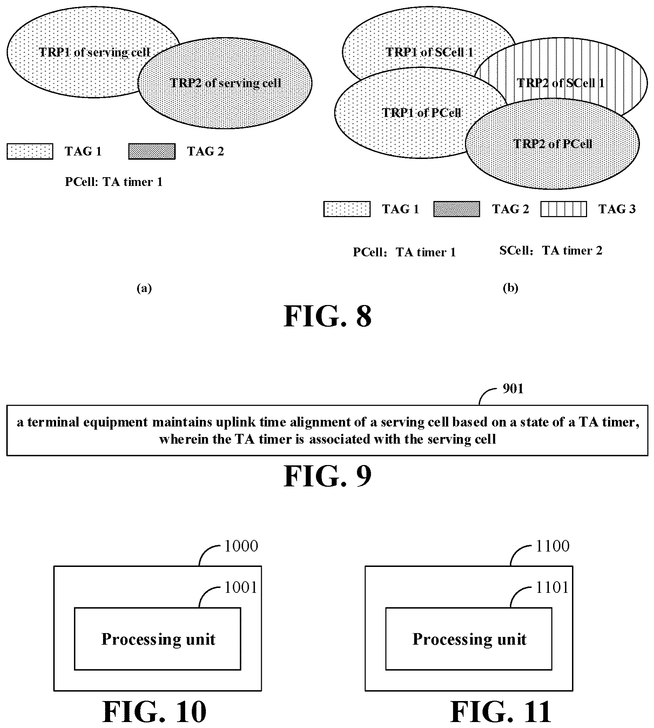

FIG. 8 is a schematic diagram of another scenario of a method for maintaining uplink time alignment in the embodiments of the present disclosure. As shown in FIG. 8, in a non-CA scenario (as shown in (a) of FIG. 8), the serving cell is associated with two TRPs, each TRP is associated with one TAG, these two TAGs are associated with the same TA timer, i.e., TA timer 1. In a CA scenario (as shown in (b) of FIG. 8), the serving cell includes a primary cell and at least one secondary cell (secondary cell 1), the primary cell is associated with TRP1 and TRP2, TRP1 is associated with TAG1, TRP2 is associated with TAG2, both TAGs are associated with the same TA timer, i.e., TA timer 1; the secondary cell 1 is also associated with TRP1 and TRP2, TRP1 is associated with TAG1, TRP2 is associated with TAG3,both TAGs are associated with the same TA timer, i.e., TA timer 2.

FIG. 9 is a schematic diagram of a method for maintaining uplink time alignment in the embodiments of the present disclosure. Please refer to FIG. 9, the method includes:
901: a terminal equipment maintains uplink time alignment of a serving cell based on a state of a TA timer, wherein the TA timer is associated with the serving cell.

It should be noted that the above FIG. 9 only schematically describes the embodiments of the present disclosure, but the present disclosure is not limited to this. For example, other some operations can be increased. Persons skilled in the art may make appropriate modifications according to the above contents, not limited to the records in the above FIG. 9.

According to the above embodiments, in a multi-DCI multi-TRP operation with two TAs, the terminal equipment maintains uplink time alignment per each serving cell based on a state of a TA timer, the TA timer is associated with two or more TAGs, so that the terminal equipment may continue to perform UL transmission when performing uplink alignment on at least one TRP associated with the serving cell, thereby enhancing uplink coverage, improving user experience, and improving network performance.

In some embodiments, the TA timer is associated with two or more TAGs, for example, this TA timer is associated with two or more TCI states or TCI state groups or spatial relationships or spatial relationship groups; for another example, the TA timer is associated with two or more CORESETs or CORESETPools; for another example, the TA timer is associated with two or more DL RSs or DL RS groups; for another example, the TA timer is associated with two or more PCIs or PCI groups that are different from the PCI of the serving cell, and so on.

In some embodiments, maintaining uplink time alignment of a serving cell refers to that a terminal equipment starts or restarts the TA timer in a case where at least one of the following conditions is satisfied, the conditions including but being not limited to:
a timing advance command (TAC) MAC CE is received;
a RAR message is received and the RAR message contains a TAC of a special cell;
a MSGB is received and the MSGB contains a TAC of a special cell;
a response message of a MSGA transmission including a C-RNTI MAC CE is received and the response message contains an absolute TAC; and
RRC signaling is received and the RRC signaling indicates a TAG ID or serving cell information.

For example, the TAC MAC CE includes a TAG ID. When the TAC MAC CE is received, the terminal equipment starts or restarts TA timers associated with all serving cells included in a TAG corresponding to the TAG ID.

For another example, when a TAC of a special cell is received in the RAR message, the terminal equipment starts or restarts a TA timer associated with the special cell.

For another example, when a TAC of a special cell is received in the MSGB, the terminal equipment starts or restarts a TA timer associated with the special cell.

For another example, when an absolute TAC is received in a response message of a MSGA transmission including a C-RNTI MAC CE, the terminal equipment starts or restarts a TA timer associated with a serving cell, the C-RNTI included in this MSGA transmission being an identifier of a terminal equipment in the serving cell.

For another example, when RRC signaling indicating a TAG ID or serving cell information is received, the terminal equipment starts or restarts TA timers associated with all serving cells included in a TAG corresponding to the TAG ID; or starts or restarts a TA timer associated with the serving cell.

In some other embodiments, maintaining uplink time alignment of a serving cell refers to that a terminal equipment stops a corresponding TA timer in a case where at least one of the following conditions is satisfied, the conditions including but being not limited to:
the contention resolution is considered not successful;
the contention resolution is considered successful for SI request after transmitting a HARQ feedback including a UE contention resolution ID MAC CE.

For example, when the contention resolution is considered not successful, the terminal equipment stops the corresponding TA timer; for another example, when the contention resolution is considered successful for SI request after transmitting a HARQ feedback including a UE contention resolution ID MAC CE, the terminal equipment stops the corresponding TA timer. The above text is just an example for description, the terminal equipment may further stop the corresponding TA timer in other situations.

According to each of the above embodiments, regarding starting / restarting / stopping a TA timer by the terminal equipment, for example, relevant descriptions in the Standard may be modified as follows:

| | | | | | |
|---|---|---|---|---|---|
| The MAC entity shall: | | | | | |
| | 1> when a Timing Advance Command MAC CE is received, and if an N_{TA} (as defined in TS 38.211 [8]) has been maintained with the indicated TAG: | | | | |
| | | 2> apply the Timing Advance Command for the indicated TAG; | | | |
| | | 2> if there is ongoing Positioning SRS Transmission in RRC_INACTIVE as in clause 5.26: | | | |
| | | 3> start or restart the *inactivePosSRS-TimeAlignmentTimer* associated with the indicated TAG. | | | |
| | | 2> if CG-SDT procedure triggered as in clause 5.27 is ongoing: | | | |
| | | | 3> start or restart the *cg-SDT-TimeAlignmentTimer* associated with the indicated TAG. | | |
| | | 2> else: | | | |
| | | | 3> start or restart the *timeAlignmentTimer* associated with **all serving cells in** the indicated TAG. | | |
| | 1> when a Timing Advance Command is received in a Random Access Response message for a Serving Cell belonging to a TAG or in a MSGB for an SpCell: | | | | |
| | | 2> if the Random Access Preamble was not selected by the MAC entity among the contention-based Random Access Preamble: | | | |
| | | | 3> apply the Timing Advance Command for this TAG; | | |
| | | | 3> start or restart the *timeAlignmentTimer* associated with **all serving cells in** this TAG. | | |
| | | 2> else if the *timeAlignmentTimer* associated with **the serving cells in** this TAG is not running: | | | |
| | | | 3> apply the Timing Advance Command for **the serving cell in** this TAG; | | |
| | | | 3> start the *timeAlignmentTimer* associated with **the serving cells in** this TAG; | | |
| | | | 3> when the Contention Resolution is considered not successful as described in clause 5.1.5; or | | |
| | | | 3> when the Contention Resolution is considered successful for SI request as described in clause 5.1.5, after transmitting HARQ feedback for MAC PDU including UE Contention Resolution Identity MAC CE: | | |
| | | | | 4> stop *timeAlignmentTimer* associated with this **serving cell.** | |
| | | | 3> when the Contention Resolution is considered not successful as described in clause 5.1.5: | | |
| | | | | 4> if CG-SDT procedure triggered as in clause 5.27 is ongoing: | |
| | | | | | 5> set the N_{TA} value to the value before applying the received Timing Advance Command as in TS 38.211 [8]. |
| | | | 3> when the Contention Resolution is considered successful for Random Access procedure while the CG-SDT procedure is ongoing: | | |
| | | | | 4> stop *timeAlignmentTimer* associated with this **serving cell;** | |
| | | | | 4> start or restart the *cg-SDT-TimeAlignmentTimer* associated with this **serving cell.** | |
| | | | 3> when the Contention Resolution is considered successful for Random Access procedure while SRS transmission in RRC_INACTIVE is ongoing: | | |
| | | | | 4> start or restart the *inactivePosSRS-TimeAlignmentTimer* associated with this **serving cell.** | |
| | | 2> else: | | | |
| | | | 3> ignore the received Timing Advance Command. | | |
| | 1> when an Absolute Timing Advance Command is received in response to a MSGA transmission including C-RNTI MAC CE as specified in clause 5.1.4a: | | | | |
| | | 2> apply the Timing Advance Command for **the serving cells** in PTAG; | | | |
| | | 2> if there is ongoing Positioning SRS Transmission in RRC_INACTIVE as in clause 5.26: | | | |
| | | | 3> start or restart the *inactivePosSRS-TimeAlignmentTimer* associated with the indicated TAG. | | |
| | | 2> if CG-SDT procedure is ongoing: | | | |
| | | | 3> start or restart the *cg-SDT-TimeAlignmentTimer* associated with PTAG. | | |
| | | 2> else: | | | |
| | | | 3> start or restart the *timeAlignmentTimer* associated with **the serving cells in** PTAG. | | |
| | | ... | | | |
| | 1> when instruction from the upper layer has been received for starting the *TimeAlignmentTimer* associated with PTAG: | | | | |
| | | 2> start the *TimeAlignmentTimer* associated with **the serving cells in** PTAG. | | | |

In some embodiments, that the terminal equipment maintains uplink time alignment of a serving cell based on a state of a TA timer refers to that when the TA timer expires and the serving cell is a special cell, the terminal equipment performs at least one of the following behaviors which include but are not limited to:
notify RRC to release uplink configurations of all serving cells;
clear all configured downlink assignments and configured uplink grants;
clear all PUSCH resources for a semi-persistent CSI reporting;
consider all running TA timers as expired; and
flush all HARQ buffers for all serving cells.

In the above embodiments, the uplink configuration e.g. is PUCCH configuration (if configured), and for another example is SRS configuration (if configured), the present disclosure is not limited to this.

In some embodiments, that the terminal equipment maintains uplink time alignment of a serving cell based on a state of a TA timer refers to that when the TA timer expires and the serving cell is a secondary cell, the terminal equipment performs at least one of the following behaviors which include but are not limited to:
notify RRC to release uplink configuration of the secondary cell;
clear all configured downlink assignments and configured uplink grants of the secondary cell;
clear all PUSCH resources for a semi-persistent CSI reporting of the secondary cell; and
flush all HARQ buffers for the secondary cell.

In the above embodiments, the uplink configuration e.g. is PUCCH configuration (if configured), and for another example is SRS configuration (if configured), the present disclosure is not limited to this.

In the above embodiments, a TA timer associated with the special cell does not expire or is running. Here, the special cell and the secondary cell may be in the same cell group or belong to the same MAC entity.

According to each of the above embodiments, regarding the terminal behaviors when the TA timer expires, for example, relevant descriptions in the Standard may be modified as follows:

| | | | |
|---|---|---|---|
| The MAC entity shall: | | | |
| | | ... | |
| | 1> when a *timeAlignmentTimer* expires: | | |
| | | 2> if the *timeAlignmentTimer* is associated with the **SpCell:** | |
| | | | 3> flush all HARQ buffers for all Serving Cells; |
| | | | 3> notify RRC to release PUCCH for all Serving Cells, if configured; |
| | | | 3> notify RRC to release SRS for all Serving Cells, if configured; |
| | | | 3> clear any configured downlink assignments and configured uplink grants; |
| | | | 3> clear any PUSCH resource for semi-persistent CSI reporting; |
| | | | 3> consider all running *timeAlignmentTimers* as expired; |
| | | | 3> maintain N_{TA} (defined in TS 38.211 [8]) of all TAGs. |
| | | 2> else if the *timeAlignmentTimer* is associated with an **SCell,** then for **the SCell:** | |
| | | | 3> flush all HARQ buffers; |
| | | | 3> notify RRC to release PUCCH, if configured; |
| | | | 3> notify RRC to release SRS, if configured; |
| | | | 3> clear any configured downlink assignments and configured uplink grants; |
| | | | 3> clear any PUSCH resource for semi-persistent CSI reporting; |
| | | | 3> maintain N_{TA} (defined in TS 38.211 [8]) of this TAG. |

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, a network device maintains uplink time alignment per each serving cell based on a state of a TA timer, the TA timer is associated with two or more TAGs, thereby the problem of uplink time alignment is solved, a transmission interruption is avoided, and network performance is improved.

### Embodiments of a third aspect

Embodiments of the present disclosure provide an apparatus for maintaining uplink time alignment. The apparatus may, for example, be a terminal equipment, or may be one or more parts or components configured in the terminal equipment. The principle of the apparatus to solve the problem is same as the method in the embodiments of the first aspect, thus its specific implementation can refer to the implementation of the method in the embodiments of the first aspect, the same contents will not be repeated.

FIG. 10 is a schematic diagram of an apparatus for maintaining uplink time alignment in the embodiments of the present disclosure. As shown in FIG. 10, the apparatus 1000 for maintaining uplink time alignment comprises:
a processing unit 1001 configured to maintain uplink time alignment of a serving cell based on one or two TA timers, wherein one TA timer is associated with a TAG, and the serving cell is associated with two TA timers.

In some embodiments, "one TA timer is associated with a TAG" includes at least one of the following:
one TA timer is associated with a TCI state or a TCI state group or a spatial relationship or a spatial relationship group;
one TA timer is associated with a CORESET or a CORESETPool;
one TA timer is associated with a DL RS or a DL RS group; and
one TA timer is associated with a PCI or a PCI group different from a PCI of the serving cell.

In some embodiments, that the processing unit 1001 maintains uplink time alignment of a serving cell comprises:
starting or restarting a TA timer corresponding to one or more TAGs in a case where at least one of the following conditions is satisfied, the conditions including:
a timing advance command (TAC) MAC CE is received by a terminal equipment;
a RAR message is received by a terminal equipment, and the RAR message contains a TAC of a special cell;
a MSGB is received by a terminal equipment, and the MSGB contains a TAC of a special cell;
a response message of a MSGA transmission including a C-RNTI MAC CE is received by a terminal equipment, and the response message contains an absolute TAC; and
RRC signaling is received by a terminal equipment, and the RRC signaling indicates a TAG ID.

In the above embodiments, the RAR message may contain TAG ID(s) of the one or more TAGs or is associated with the one or more TAGs.

In the above embodiments, the MSGB may contain TAG ID(s) of the one or more TAGs or is associated with the one or more TAGs.

In the above embodiments, the response message may contain TAG ID(s) of the one or more TAGs or is associated with the one or more TAGs.

In the above embodiments, "being associated with a TAG" includes at least one of the following:
being associated with a TCI state or a TCI state group or a spatial relationship or a spatial relationship group;
being associated with a CORESET or a CORESETPool;
being associated with a DL RS or a DL RS group; and
being associated with a PCI or a PCI group different from a PCI of the serving cell.

In some embodiments, "maintaining uplink time alignment of a serving cell" comprises:
stopping a corresponding TA timer by the processing unit 1001 in a case where at least one of the following conditions is satisfied, the conditions including:
the contention resolution is considered not successful, by a terminal equipment;
the contention resolution is considered successful for SI request after transmitting a HARQ feedback including a UE contention resolution ID MAC CE, by a terminal equipment.

In some embodiments, when the serving cell is a special cell, the TAG is a primary TAG, and the number of the primary TAGs is two.

In the above embodiments, the special cell may belong to two primary TAGs.

In some embodiments, when the serving cell is a secondary cell, the secondary cell belongs to two TAGs.

In the above embodiments, the two TAGs are all primary TAGs, or the two TAGs are all secondary TAGs, or one of the two TAGs is a primary TAG, and the other one is a secondary TAG.

In some embodiments, that the processing unit 1001 maintains uplink time alignment of a serving cell based on one TA timer comprises:
when the TA timer expires, the processing unit 1001 performs at least one of the following behaviors:
not performing or stopping uplink transmission associated with the TA timer;
not performing or stopping uplink transmission corresponding to a TAG associated with the TA timer;
clearing configured downlink assignments and configured uplink grants associated with the TA timer;
clearing configured downlink assignments and configured uplink grants corresponding to the TAG associated with the TA timer;
clearing PUSCH resources for a semi-persistent CSI reporting associated with the TA timer;
clearing PUSCH resources for a semi-persistent CSI reporting;
flushing an HARQ buffer corresponding to the TAG associated with the TA timer; and
flushing an HARQ buffer associated with the TA timer.

In the above embodiments, "the TA timer expires" includes:
one of the two TA timers expires, and the other TA timer is running.

In some embodiments, that the processing unit 1001 maintains uplink time alignment of a serving cell based on two TA timers comprises:
when both TA timers associated with a secondary cell expire, the processing unit 1001 performs at least one of the following behaviors:
notifying RRC to release uplink configuration of the secondary cell;
clearing all configured downlink assignments and configured uplink grants of the secondary cell;
clearing all PUSCH resources for a semi-persistent CSI reporting of the secondary cell; and
flushing all HARQ buffers for the secondary cell.

In the above embodiments, at least one TA timer associated with the special cell or the primary TAG does not expire or is running.

In some embodiments, that the processing unit 1001 maintains uplink time alignment of a serving cell based on two TA timers comprises:
when both TA timers associated with the special cell and/or the primary TAG expire, the processing unit 1001 performs at least one of the following behaviors:
notifying RRC to release uplink configurations of all serving cells;
clearing all configured downlink assignments and configured uplink grants;
clearing all PUSCH resources for a semi-persistent CSI reporting;
considering all running TA timers as expired; and
flushing all HARQ buffers for all serving cells.

Embodiments of the present disclosure further provide an apparatus for maintaining uplink time alignment. The apparatus may, for example, be a terminal equipment, or may be one or more parts or components configured in the terminal equipment. The principle of the apparatus to solve the problem is same as the method in the embodiments of the second aspect, thus for its specific implementation, the implementation of the method in the embodiments of the second aspect may be referred to, the same contents will not be repeated.

FIG. 11 is another schematic diagram of an apparatus for maintaining uplink time alignment in the embodiments of the present disclosure. As shown in FIG. 11, the apparatus 1100 for maintaining uplink time alignment comprises:
a processing unit 1101 configured to maintain uplink time alignment of a serving cell based on a state of a TA timer, wherein the TA timer is associated with the serving cell.

In some embodiments, the TA timer is associated with two or more TAGs.

In the above embodiments, that the TA timer is associated with two or more TAGs comprises at least one of the following:
the TA timer is associated with two or more TCI states or TCI state groups or spatial relationships or spatial relationship groups;
the TA timer is associated with two or more CORESETs or CORESETPools;
the TA timer is associated with two or more DL RSs or DL RS groups; and
the TA timer is associated with two or more PCIs or PCI groups different from a PCI of the serving cell.

In some embodiments, "maintaining uplink time alignment of a serving cell" comprises:
starting or restarting the TA timer by the processing unit 1101 in a case where at least one of the following conditions is satisfied, the conditions including:
a timing advance command (TAC) MAC CE is received by a terminal equipment;
a RAR message is received by a terminal equipment, and the RAR message contains a TAC of a special cell;
a MSGB is received by a terminal equipment, and the MSGB contains a TAC of a special cell;
a response message of a MSGA transmission including a C-RNTI MAC CE is received by a terminal equipment, and the response message contains an absolute TAC; and
RRC signaling is received by a terminal equipment, and the RRC signaling indicates a TAG ID or serving cell information.

For example, the TAC MAC CE includes a TAG ID. When the terminal equipment receives the TAC MAC CE, the processing unit 1101 starts or restarts TA timers associated with all serving cells included in a TAG corresponding to the TAG ID.

For another example, when the terminal equipment receives the RAR message, the processing unit 1101 starts or restarts a TA timer associated with the special cell.

For another example, when the terminal equipment receives the MSGB, the processing unit 1101 starts or restarts a TA timer associated with the special cell.

For another example, when the terminal equipment receives a response message of a MSGA transmission including a C-RNTI MAC CE, the processing unit 1101 starts or restarts a TA timer associated with a serving cell, the C-RNTI included in this MSGA transmission being an identifier of a terminal equipment in the serving cell.

For another example, when the terminal equipment receives the RRC signaling, the processing unit 1101 starts or restarts TA timers associated with all serving cells included in a TAG corresponding to the TAG ID; or starts or restarts a TA timer associated with the serving cell.

In some embodiments, "maintaining uplink time alignment of a serving cell" comprises:
stopping a corresponding TA timer by the processing unit 1101 in a case where at least one of the following conditions is satisfied, the conditions including:
the contention resolution is considered not successful, by a terminal equipment;
the contention resolution is considered successful for SI request after transmitting a HARQ feedback including a UE contention resolution ID MAC CE.

In some embodiments, that the processing unit 1101 maintains uplink time alignment of a serving cell based on a state of a TA timer comprises:
when the TA timer expires and the serving cell is a special cell, the processing unit 1101 performs at least one of the following behaviors:
notifying RRC to release uplink configurations of all serving cells;
clearing all configured downlink assignments and configured uplink grants;
clearing all PUSCH resources for a semi-persistent CSI reporting;
considering all running TA timers as expired; and
flushing all HARQ buffers for all serving cells.

In some embodiments, that the processing unit 1101 maintains uplink time alignment of a serving cell based on a state of a TA timer comprises:
when the TA timer expires and the serving cell is a secondary cell, the processing unit 1101 performs at least one of the following behaviors:
notifying RRC to release uplink configuration of the secondary cell;
clearing all configured downlink assignments and configured uplink grants of the secondary cell;
clearing all PUSCH resources for a semi-persistent CSI reporting of the secondary cell; and
flushing all HARQ buffers for the secondary cell.

In the above embodiments, a TA timer associated with the special cell does not expire or is running.

It's worth noting that the above only describes components or modules related to the present disclosure, but the present disclosure is not limited to this. The apparatuses 1000 and 1100 in the embodiments of the present disclosure may further comprise other components or modules. For detailed contents of these components or modules, relevant technologies may be referred to.

Moreover, for the sake of simplicity, FIG. 10 and FIG. 11 only exemplarily show a connection relationship or signal direction between components or modules, however persons skilled in the art should know that various relevant technologies such as bus connection can be used. The above components or modules may be realized by a hardware facility such as a processor, a memory, a transmitter, a receiver, etc. The embodiments of the present disclosure have no limitation to this.

According to the apparatus in the embodiments of the present disclosure, the terminal equipment is capable of continuing UL transmission when performing uplink alignment on at least one TRP associated with the serving cell, thereby enhancing uplink coverage, improving user experience, and improving network performance.

### Embodiments of a fourth aspect

Embodiments of the present disclosure provide a communication system, comprising a terminal equipment and a network device, the terminal equipment is configured to perform the method described in the embodiments of the first or second aspect, and the network device is configured to perform content of a network side corresponding to the method described in the embodiments of the first or second aspect. Behaviors of the terminal equipment have been described in detail in the embodiments of the first and second aspects, whose contents are incorporated here and will not be repeated here. For behaviors of the network device, relevant technologies may be referred to.

Embodiments of the present disclosure further provide a terminal equipment, comprising a memory and a processor, the memory storing a computer program, and the processor being configured to perform the computer program to implement the method described in the embodiments of the first or second aspect.

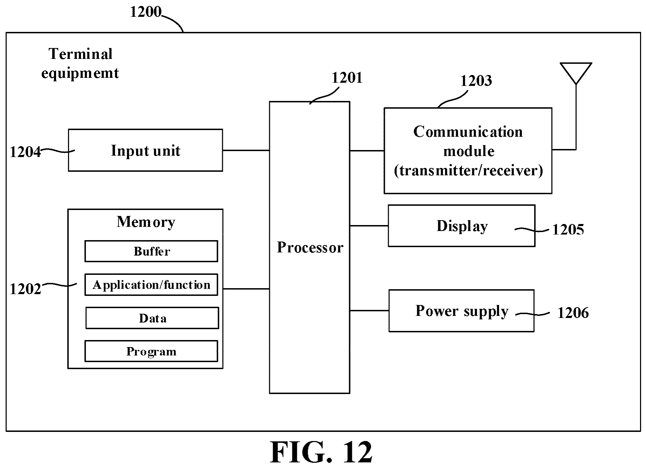

FIG. 12 is a schematic diagram of a terminal equipment in the embodiments of the present disclosure. As shown in FIG. 12, the terminal equipment 1200 may comprise a processor 1201 and a memory 1202; the memory 1202 stores data and programs, and is coupled to the processor 1201. It's worth noting that this figure is exemplary; other types of structures may also be used to supplement or replace this structure, so as to realize a telecommunication function or other functions.

For example, the processor 1201 may be configured to execute a program to implement the method described in the embodiments of the first aspect or the second aspect.

As shown in FIG. 12, the terminal equipment 1200 may further comprise: a communication module 1203, an input unit 1204, a display 1205 and a power supply 1206. The functions of said components are similar to related arts, which are not repeated here. It's worth noting that the terminal equipment 1200 does not have to include all the components shown in FIG. 12, said components are not indispensable. Moreover, the terminal equipment 1200 may further include components not shown in FIG. 12, related arts may be referred to.

Embodiments of the present disclosure further provide a computer readable program, wherein when a terminal equipment executes the program, the program enables a computer to execute the method described in the embodiments of the first or second aspect, in the terminal equipment.

Embodiments of the present disclosure further provide a storage medium in which a computer readable program is stored, wherein the computer readable program enables a computer to execute the method as described in the embodiments of the first or second aspect, in the terminal equipment.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The logic component is e.g. a field programmable logic component, a microprocessor, a processor used in a computer, etc. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the principle of the present disclosure, these variations and modifications are also within the scope of the present disclosure.

Regarding the above implementations disclosed in this embodiment, the following supplements are further disclosed:
1. A method for maintaining uplink time alignment, wherein the method includes:
   a terminal equipment maintains uplink time alignment of a serving cell based on one or two TA timers, wherein one TA timer is associated with a TAG, and the serving cell is associated with two TA timers.
2. The method according to Supplement 1, wherein maintaining uplink time alignment of a serving cell comprises:
   the terminal equipment starts or restarts a TA timer corresponding to one or more TAGs in a case where at least one of the following conditions is satisfied, the conditions including:
   a timing advance command (TAC) MAC CE is received;
   a RAR message is received and the RAR message contains a TAC of a special cell;
   a MSGB is received and the MSGB contains a TAC of a special cell;
   a response message of a MSGA transmission including a C-RNTI MAC CE is received and the response message contains an absolute TAC; and
   RRC signaling is received and the RRC signaling indicates a TAG ID.
3. The method according to Supplement 2, wherein,
   the RAR message contains TAG ID(s) of the one or more TAGs or is associated with the one or more TAGs.
4. The method according to Supplement 2, wherein,
   the MSGB contains TAG ID(s) of the one or more TAGs or is associated with the one or more TAGs.
5. The method according to Supplement 2, wherein,
   the response message contains TAG ID(s) of the one or more TAGs or is associated with the one or more TAGs.
6. The method according to Supplement 1, wherein that one TA timer is associated with a TAG comprises at least one of the following:
   one TA timer is associated with a TCI state or a TCI state group or a spatial relationship or a spatial relationship group;
   one TA timer is associated with a CORESET or a CORESETPool;
   one TA timer is associated with a DL RS or a DL RS group; and
   one TA timer is associated with a PCI or a PCI group different from a PCI of the serving cell.
7. The method according to any one of Supplements 3-5, wherein being associated with one TAG comprises at least one of the following:
   being associated with a TCI state or a TCI state group or a spatial relationship or a spatial relationship group;
   being associated with a CORESET or a CORESETPool;
   being associated with a DL RS or a DL RS group; and
   being associated with a PCI or a PCI group different from a PCI of the serving cell.
8. The method according to Supplement 1, wherein maintaining uplink time alignment of a serving cell comprises:
   the terminal equipment stops a corresponding TA timer in a case where at least one of the following conditions is satisfied, the conditions including:
   the contention resolution is considered not successful;
   the contention resolution is considered successful for SI request after transmitting a HARQ feedback including a UE contention resolution ID MAC CE.
9. The method according to Supplement 1, wherein,
   when the serving cell is a special cell, the TAG is a primary TAG, and the number of the primary TAGs is two.
10. The method according to Supplement 9, wherein,
   the special cell belongs to two primary TAGs.
11. The method according to Supplement 1, wherein,
   when the serving cell is a secondary cell, the secondary cell belongs to two TAGs.
12. The method according to Supplement 11, wherein,
   the two TAGs are all primary TAGs, or the two TAGs are all secondary TAGs, or one of the two TAGs is a primary TAG, and the other one is a secondary TAG.
13. The method according to Supplement 1, wherein that the terminal equipment maintains uplink time alignment of a serving cell based on one TA timer comprises:
   when the TA timer expires, the terminal equipment performs at least one of the following behaviors:
   not performing or stopping uplink transmission associated with the TA timer;
   not performing or stopping uplink transmission corresponding to a TAG associated with the TA timer;
   clearing configured downlink assignments and configured uplink grants associated with the TA timer;
   clearing configured downlink assignments and configured uplink grants corresponding to a TAG associated with the TA timer;
   clearing PUSCH resources for a semi-persistent CSI reporting associated with the TA timer;
   clearing PUSCH resources for a semi-persistent CSI reporting;
   flushing an HARQ buffer corresponding to a TAG associated with the TA timer; and
   flushing an HARQ buffer associated with the TA timer.
14. The method according to Supplement 13, wherein that the TA timer expires comprises:
   one of the two TA timers expires, and the other TA timer is running.
15. The method according to Supplement 1, wherein that the terminal equipment maintains uplink time alignment of a serving cell based on two TA timers comprises:
   when two TA timers associated with a secondary cell expire, the terminal equipment performs at least one of the following behaviors:
   notifying RRC to release uplink configuration of the secondary cell;
   clearing all configured downlink assignments and configured uplink grants of the secondary cell;
   clearing all PUSCH resources for a semi-persistent CSI reporting of the secondary cell; and
   flushing all HARQ buffers for the secondary cell.
16. The method according to Supplement 15, wherein,
   at least one TA timer associated with the special cell or the primary TAG does not expire or is running.
17. The method according to Supplement 1, wherein that the terminal equipment maintains uplink time alignment of a serving cell based on two TA timers comprises:
   when both two TA timers associated with the special cell and/or the primary TAG expire, the terminal equipment performs at least one of the following behaviors:
   notifying RRC to release uplink configurations of all serving cells;
   clearing all configured downlink assignments and configured uplink grants;
   clearing all PUSCH resources for a semi-persistent CSI reporting;
   considering all running TA timers as expired; and
   flushing all HARQ buffers for all serving cells.
18. A method for maintaining uplink time alignment, wherein the method includes:
   a terminal equipment maintains uplink time alignment of a serving cell based on a state of a TA timer, wherein the TA timer is associated with the serving cell.
19. The method according to Supplement 18, wherein,
   the TA timer is associated with two or more TAGs.
20. The method according to Supplement 19, wherein that the TA timer is associated with two or more TAGs comprises at least one of the following:
   the TA timer is associated with two or more TCI states or TCI state groups or spatial relationships or spatial relationship groups;
   the TA timer is associated with two or more CORESETs or CORESETPools;
   the TA timer is associated with two or more DL RSs or DL RS groups; and
   the TA timer is associated with two or more PCIs or PCI groups different from a PCI of the serving cell.
21. The method according to any one of Supplements 18-20, wherein maintaining uplink time alignment of a serving cell comprises:
   the terminal equipment starts or restarts the TA timer in a case where at least one of the following conditions is satisfied, the conditions including:
   a timing advance command (TAC) MAC CE is received;
   a RAR message is received and the RAR message contains a TAC of a special cell;
   a MSGB is received and the MSGB contains a TAC of a special cell;
   a response message of a MSGA transmission including a C-RNTI MAC CE is received and the response message contains an absolute TAC; and
   RRC signaling is received, and the RRC signaling indicates a TAG ID or serving cell information.
21a. The method according to Supplement 21, wherein,
   the TAC MAC CE includes a TAG ID, and when the TAC MAC CE is received, the terminal equipment starts or restarts TA timers associated with all serving cells included in a TAG corresponding to the TAG ID.
21b. The method according to Supplement 21, wherein,
   when the RAR message is received, the terminal equipment starts or restarts a TA timer associated with the special cell.
21c. The method according to Supplement 21, wherein,
   when the MSGB is received, the terminal equipment starts or restarts a TA timer associated with the special cell.
21d. The method according to Supplement 21, wherein,
   when a response message of a MSGA transmission including a C-RNTI MAC CE is received, the terminal equipment starts or restarts a TA timer associated with the serving cell, the C-RNTI included in the MSGA transmission being an identifier of a terminal equipment in the serving cell.
21e. The method according to Supplement 21, wherein,
   when the RRC signaling is received, the terminal equipment starts or restarts TA timers associated with all serving cells included in a TAG corresponding to the TAG ID; or starts or restarts a TA timer associated with the serving cell.
22. The method according to any one of Supplements 18-20, wherein maintaining uplink time alignment of a serving cell comprises:
   the terminal equipment stops a corresponding TA timer in a case where at least one of the following conditions is satisfied, the conditions including:
   the contention resolution is considered not successful;
   the contention resolution is considered successful for SI request after transmitting a HARQ feedback including a UE contention resolution ID MAC CE.
23. The method according to any one of Supplements 18-22, wherein that the terminal equipment maintains uplink time alignment of a serving cell based on a state of a TA timer comprises:
   when the TA timer expires and the serving cell is a special cell, the terminal equipment performs at least one of the following behaviors:
   notifying RRC to release uplink configurations of all serving cells;
   clearing all configured downlink assignments and configured uplink grants;
   clearing all PUSCH resources for a semi-persistent CSI reporting;
   considering all running TA timers as expired; and
   flushing all HARQ buffers for all serving cells.
24. The method according to any one of Supplements 18-23, wherein that the terminal equipment maintains uplink time alignment of a serving cell based on a state of a TA timer comprises:
   when the TA timer expires and the serving cell is a secondary cell, the terminal equipment performs at least one of the following behaviors:
   notifying RRC to release uplink configuration of the secondary cell;
   clearing all configured downlink assignments and configured uplink grants of the secondary cell;
   clearing all PUSCH resources for a semi-persistent CSI reporting of the secondary cell; and
   flushing all HARQ buffers for the secondary cell.
25. The method according to Supplement 24, wherein,
   a TA timer associated with the special cell does not expire or is running.
26. A terminal equipment, comprising a memory and a processor, the memory storing a computer program, and the processor being configured to execute the computer program to implement the method according to any one of Supplements 1 to 25.
27. A communication system, comprising a terminal equipment and a network device, the terminal equipment being configured to execute the method according to any one of Supplements 1 to 25.

## Claims

1. An apparatus for maintaining uplink time alignment, configured in a terminal equipment, wherein the apparatus comprises:
a processing unit configured to maintain uplink time alignment of a serving cell based on one or two timing advance (TA) timers, wherein one TA timer is associated with a timing advance group (TAG), and the serving cell is associated with two TA timers.

2. The apparatus according to claim 1, wherein that the processing unit maintains uplink time alignment of a serving cell comprises:
starting or restarting a TA timer corresponding to one or more TAGs by the processing unit in a case where at least one of the following conditions is satisfied, the conditions including:
a timing advance command (TAC) media access control control element (MAC CE) is received;
a random access response (RAR) message is received and the RAR message contains a TAC of a special cell;
a message B (MSGB) is received and the MSGB contains a TAC of a special cell;
a response message of a message A (MSGA) transmission including a cell radio network temporary identifier (C-RNTI) MAC CE is received and the response message contains an absolute TAC; and
a radio resource control (RRC) signaling is received and the RRC signaling indicates a TAG identifier (ID).

3. The apparatus according to claim 2, wherein,
the RAR message contains TAG ID(s) of the one or more TAGs or is associated with the one or more TAGs.

4. The apparatus according to claim 2, wherein,
the MSGB contains TAG ID(s) of the one or more TAGs or is associated with the one or more TAGs.

5. The apparatus according to claim 2, wherein,
the response message contains TAG ID(s) of the one or more TAGs or is associated with the one or more TAGs.

6. The apparatus according to claim 1, wherein that one TA timer is associated with a TAG comprises at least one of the following:
one TA timer is associated with a TCI state or a TCI state group or a spatial relationship or a spatial relationship group;
one TA timer is associated with a control resource set (CORESET) or a control resource set pool (CORESETPool);
one TA timer is associated with a downlink reference signal (DL RS) or a DL RS group; and
one TA timer is associated with a physical cell identifier (PCI) or a PCI group different from a PCI of the serving cell.

7. The apparatus according to claim 3, wherein being associated with the TAG comprises at least one of the following:
being associated with a TCI state or a TCI state group or a spatial relationship or a spatial relationship group;
being associated with a CORESET or a CORESETPool;
being associated with a DL RS or a DL RS group; and
being associated with a PCI or a PCI group different from a PCI of the serving cell.

8. The apparatus according to claim 1, wherein,
when the serving cell is a special cell, the TAG is a primary TAG, and the number of the primary TAGs is two.

9. The apparatus according to claim 1, wherein that the processing unit maintains uplink time alignment of a serving cell based on one TA timer comprises:
when the TA timer expires, the processing unit performs at least one of the following behaviors:
not performing or stopping uplink transmission associated with the TA timer;
not performing or stopping uplink transmission corresponding to a TAG associated with the TA timer;
clearing configured downlink assignments and configured uplink grants associated with the TA timer;
clearing configured downlink assignments and configured uplink grants corresponding to a TAG associated with the TA timer;
clearing physical uplink shared channel (PUSCH) resources for a semi-persistent channel state information (CSI) reporting associated with the TA timer;
clearing PUSCH resources for a semi-persistent CSI reporting;
flushing a hybrid automatic repeat request (HARQ) buffer corresponding to a TAG associated with the TA timer; and
flushing an HARQ buffer associated with the TA timer.

10. The apparatus according to claim 9, wherein that the TA timer expires comprises:
one of the two TA timers expires, and the other TA timer is running.

11. The apparatus according to claim 1, wherein that the processing unit maintains uplink time alignment of a serving cell based on two TA timers comprises:
when two TA timers associated with a secondary cell expire, the processing unit performs at least one of the following behaviors:
notifying RRC to release uplink configuration of the secondary cell;
clearing all configured downlink assignments and configured uplink grants of the secondary cell;
clearing all PUSCH resources for a semi-persistent CSI reporting of the secondary cell; and
flushing all HARQ buffers for the secondary cell.

12. The apparatus according to claim 11, wherein,
at least one TA timer associated with the special cell or the primary TAG does not expire or is running.

13. The apparatus according to claim 1, wherein that the processing unit maintains uplink time alignment of a serving cell based on two TA timers comprises:
when both two TA timers associated with the special cell and/or the primary TAG expire, the processing unit performs at least one of the following behaviors:
notifying RRC to release uplink configurations of all serving cells;
clearing all configured downlink assignments and configured uplink grants;
clearing all PUSCH resources for a semi-persistent CSI reporting;
considering all running TA timers as expired; and
flushing all HARQ buffers for all serving cells.

14. An apparatus for maintaining uplink time alignment, configured in a terminal equipment, wherein the apparatus comprises:
a processing unit configured to maintain uplink time alignment of a serving cell based on a state of a TA timer, wherein the TA timer is associated with the serving cell.

15. The apparatus according to claim 14, wherein,
the TA timer is associated with two or more TAGs.

16. The apparatus according to claim 15, wherein that the TA timer is associated with two or more TAGs comprises at least one of the following:
the TA timer is associated with two or more TCI states or TCI state groups or spatial relationships or spatial relationship groups;
the TA timer is associated with two or more CORESETs or CORESETPools;
the TA timer is associated with two or more DL RSs or DL RS groups; and
the TA timer is associated with two or more PCIs or PCI groups different from a PCI of the serving cell.

17. The apparatus according to claim 14, wherein that the processing unit maintains uplink time alignment of a serving cell based on a state of a TA timer comprises:
when the TA timer expires and the serving cell is a special cell, the processing unit performs at least one of the following behaviors:
notifying RRC to release uplink configurations of all serving cells;
clearing all configured downlink assignments and configured uplink grants;
clearing all PUSCH resources for a semi-persistent CSI reporting;
considering all running TA timers as expired; and
flushing all HARQ buffers for all serving cells.

18. The apparatus according to claim 14, wherein that the processing unit maintains uplink time alignment of a serving cell based on a state of a TA timer comprises:
when the TA timer expires and the serving cell is a secondary cell, the processing unit performs at least one of the following behaviors:
notifying RRC to release uplink configuration of the secondary cell;
clearing all configured downlink assignments and configured uplink grants of the secondary cell;
clearing all PUSCH resources for a semi-persistent CSI reporting of the secondary cell; and
flushing all HARQ buffers for the secondary cell.

19. The apparatus according to claim 18, wherein,
a TA timer associated with the special cell does not expire or is running.

20. A terminal equipment, comprising a memory and a processor, the memory storing a computer program, and the processor being configured to execute the computer program to implement a method as below:
maintaining uplink time alignment of a serving cell based on one or two TA timers, wherein one TA timer is associated with a TAG, and the serving cell is associated with two TA timers; or,
maintaining uplink time alignment of a serving cell based on a state of a TA timer, wherein the TA timer is associated with the serving cell.
